# EUROPÄISCHE PATENTANMELDUNG

(11) **EP 1 398 231 A2**
(43) Veröffentlichungstag der Anmeldung: **17.03.2004**
(21) Anmeldenummer: 03025962.6
(22) Anmeldetag: 08.01.1999
(51) Int. Cl.: B60S 1/08

(54) **Regensensor**

(30) Priorität: 12.10.1998 DE 19846968
(62) Teilanmeldung aus: 99906031.2
(71) Anmelder: ROBERT BOSCH GMBH, 70442 Stuttgart (DE)
(72) Erfinder: Michenfelder, Gebhard, 77839 Lichtenau (DE); Riehl, Guenther, 77815 Buehl (DE); Burkart, Manfred, 76473 Iffezheim (DE); Roth, Klaus, 73207 Plochingen (DE)

(57) **Zusammenfassung**

Die Erfindung betrifft einen Regensensor, insbesondere für Kraftfahrzeuge, mit einer wenigstens einen Sender und wenigstens einen Empfänger für elektromagnetische Wellen (Lichtwellen) aufweisenden Meßstrecke, in der eine Windschutzscheibe angeordnet ist und die die Wellenausbreitung zwischen dem wenigstens einen Sender und dem wenigstens einen Empfänger derart beeinflußt, daß sich bei Ausbildung eines Belages auf der Windschutzscheibe, insbesondere bei einer Benetzung durch Niederschlag, ein vom Empfänger sensiertes Ausgangssignal ändert.

Es ist vorgesehen, daß die optischen und elektronischen Komponenten des Regensensors (4) in einem Gehäuse (6) montiert sind, wobei ein Lichtleitkörper (10), einen Deckel des Gehäuses (6) bildet.

## Beschreibung

Die Erfindung betrifft einen Regensensor mit den im Oberbegriff des Anspruchs 1 genannten Merkmalen.

### Stand der Technik

Es sind Scheibenwischvorrichtungen für Windschutzscheiben von Kraftfahrzeugen bekannt, bei denen eine Steuerung der Scheibenwischer nicht nur über einen herkömmlichen Lenkstockhebel, sondern zusätzlich über einen optischen Regensensor erfolgt. Der optische Regensensor umfaßt üblicherweise eine Lichtquelle, deren elektromagnetische Strahlung von der Windschutzscheibe, je nach Feuchtigkeitsbelag auf der Windschutzscheibe unterschiedlich reflektiert wird. Der reflektierte Anteil wird mittels eines Photoelementes erfaßt, so daß ein dem Feuchtigkeitsbelag entsprechendes Ausgangssignal des Regensensors bereitgestellt werden kann. Diese Ausgangssignale können derart ausgewertet und zur Steuerung der Scheibenwischer verwendet werden, daß sowohl die Einschaltung als auch die Wischergeschwindigkeit in Abhängigkeit von einer gemessenen Regenmenge variiert wird.

Bekannte Regensensoren werden üblicherweise innen an der Windschutzscheibe angebracht, vorzugsweise hinter einem Innenrückspiegel. Zur Befestigung werden beispielsweise geklebte Mefallfüße verwendet. Bekannt sind daneben auch Befestigungen über einen zusätzlichen Rahmen, der zuvor mit der Scheibe verbunden wird und in den später das Regensensorgehäuse eingedrückt wird.

### Vorteile der Erfindung

Der erfindungsgemäße Regensensor mit den im Anspruch 1 genannten Merkmalen weist insbesondere den Vorteil auf, daß im wesentlichen nur drei Einzelteile zu seinem Aufbau erforderlich sind. Der Regensensor besteht im wesentlichen aus einem Gehäuse, aus dem die elektrischen Leitungen zur Verbindung mit einer nachgeschalteten Auswerteeinheit herausgeführt sind, einer Leiterplatte beziehungsweise Platine sowie einem Lichtleitkörper, der vorzugsweise bereits über alle notwendigen optischen Linsenstrukturen verfügt. Dadurch wird ein kostengünstiger, sehr kompakter und einfach zu montierender Regensensor bereitgestellt. Insbesondere über eine transparente Folie, die vorzugsweise beidseitig selbstklebend ist, läßt sich eine einfache Montage des Regensensors erreichen, ohne daß dessen optische Eigenschaften beeinträchtigt werden. Ferner läßt sich der Regensensor mit wenigen Montageschritten herstellen, so daß dieser kostengünstig in Massenfertigung produzierbar ist.

Durch eine Montage aller erforderlichen elektronischen und optoelektronischen Bauteile auf einer gemeinsamen Platine, vorzugsweise in SMD-(Surface Mounted Device)-Technik bestückt, lassen sich sehr kompakte Sensoren realisieren, die sich zudem im Fahrzeug problemlos montieren lassen. So kann ein derartiger Regensensor deutlich kompakter ausgeführt sein als bekannte Regensensoren und wie diese beispielsweise hinter einem Innenrückspiegel an der Innenseite der Windschutzscheibe montiert sein.

In bevorzugter Ausgestaltung der Erfindung bildet der Lichtleitkörper gleichzeitig den Deckel des Sensorgehäuses und bildet auf diese Weise mit diesem ein komplettes Elektronikgehäuse. Die Verbindung kann in vorteilhafter Weise durch Verklipsen sichergestellt werden. Eine abziehbare Schutzfolie auf äußerer Klebeseite der transparenten Klebefolie bildet gleichzeitig einen Schutz des Lichtleitkörpers gegen mechanische Beschädigung bereits beim Transport. Durch den sehr kompakten Aufbau sind Autohersteller als Abnehmer derartiger Regensensoren in die Lage versetzt, eine einfache und schnelle und damit sehr kostengünstige Montage vornehmen zu können, die sich zudem problemlos automatisieren läßt.

Ein Ausgangssignal des erfindungsgemäßen Regensensors läßt sich in vorteilhafter Weise zur Ansteuerung einer Scheibenwischvorrichtung und/oder einer Fahrzeugbeleuchtung einsetzen. So kann es beispielsweise bei stärkerem Regen oder bei Nebel sinnvoll sein, zusätzliche Nebelscheinwerfer automatisch einzuschalten.

In einer bevorzugten Ausgestaltung der Erfindung kann neben dem Regensensor zusätzlich ein Helligkeitssensor für Umgebungslicht integriert sein, der ein weitgehend vom Tageslicht beeinflußtes Signal liefert und dementsprechend einen relativ weiten und nach oben gerichteten Öffnungskegel für einfallendes Licht aufweist. Vorteilhaft ist weiterhin, wenn der Helligkeitssensor empfindlich ist auf ultraviolette Lichtanteile, wie sie im Sonnenlicht, nicht jedoch bei künstlichem Licht, vorkommen. Auf diese Weise kann eine Fehlauslösung durch starkes künstliches Licht, beispielsweise bei einer Tunneldurchfahrt, vermieden werden.

Die Fokussierung des einfallenden Lichts kann in vorteilhafter Weise durch den Lichtleitkörper erfolgen, der gleichzeitig als Grundplatte für das Sensorgehäuse fungiert. Ein solcher Lichtleitkörper kann beispielsweise aus einem Kunststoff wie PMMA (Polymethylmetachrylat) im Spritzgußverfahren hergestellt sein, wobei sich in einfacher Weise optische Strukturen wie Sammellinsen im Formprozeß einbringen lassen. Bei Verwendung von infrarotem Licht für die Regensensorfunktion ist es vorteilhaft, den Lichtleitkörper aus schwarzem PMMA herzustellen und lediglich den Lichtdurchtritt für den Umgebungslichtsensor aus klarem Kunststoff vorzusehen. Dies läßt sich beispielsweise durch Verarbeitung im sogenannten Zweifarbspritzverfahren oder auch durch Kombination, beispielsweise durch Verklebung oder Verschweißung, zweier einfarbiger Kunststoffteile realisieren.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1a: eine schematische Seitenansicht eines erfindungsgemäßen Regensensors,
- Figur 1b: eine schematische Draufsicht auf den Regensensor entsprechend Figur 1,
- Figur 2: eine schematische Schnittansicht des erfindungsgemäßen Regensensors in einer Explosionsdarstellung und

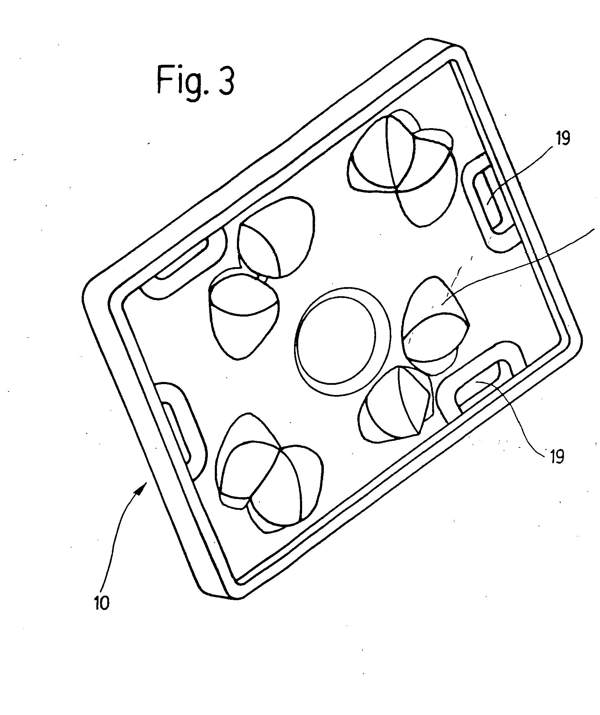

- Figur 3: einen Lichtleitkörper in einer perspektivischen Darstellung.

### Beschreibung der Ausführungsbeispiele

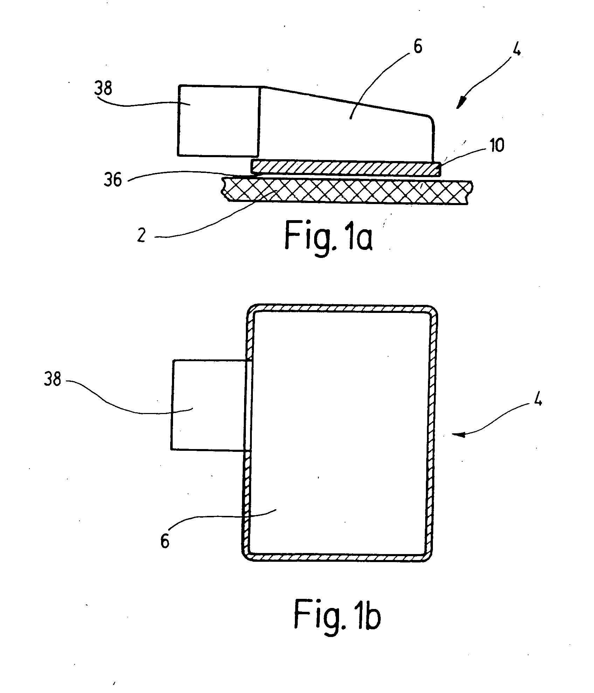

Figur 1a zeigt in einer schematischen Seitenansicht einen erfindungsgemäßen Regensensor 4, der innen an einer Windschutzscheibe 2 eines Kraftfahrzeuges befestigbar ist. Die Montage des Regensensors 4 hinter der Windschutzscheibe 2 kann beispielsweise durch Klebung in Höhe eines hier nicht dargestellten Innenrückspiegels erfolgen. Bei einer Positionierung hinter dem Rückspiegel entsteht keine zusätzliche Sichtbehinderung für einen Fahrer. Die elektronischen und optoelektronischen Bauteile des Regensensors 4 sind umschlossen von einem Gehäuse 6, das nach innen hin, das heißt zum Fahrgastraum, lichtundurchlässig ist. Die Gehäuseunterseite, die eine flächige Verbindung zur Windschutzscheibe 2 bildet, stellt ein Lichtleit körper 10 dar, in den alle zur Funktion erforderlichen optischen Strukturen (Linsenstrukturen, Lichtleitstrukturen und dergleichen) eingebracht sind. Dies kann beispielsweise durch ein Spritzgußverfahren eines geeigneten optisch durchlässigen Kunststoffes erfolgen. Zur mechanischen und optischen Koppelung des Regensensors 4 mit der Windschutzscheibe ist der Lichtleitkörper 10 über eine beidseitig selbstklebende transparente Klebefolie 36 mit der Windschutzscheibe 2 verbunden.

Figur 1b zeigt eine schematische Draufsicht auf den Regensensor 4 entsprechend Figur 1a. Erkennbar ist hierbei ein Stecker 38 zur elektrischen Verbindung zu einer nachgeschalteten, hier jedoch nicht dargestellten, Auswerteeinheit. Diese kann anhand der vom Regensensor 4 gelieferten Signale eine Scheibenwischvorrichtung und/oder eine Fahrzeugbeleuchtung variabel ansteuern. Der Stecker 38 kann, je nach Ausführungsform vier oder beispielsweise acht Steckerstifte aufweisen, die in eine montierte Platine im Gehäuse 6 hineinragen und dort zur Herstellung einer elektrischen Verbindung verlötet oder verpreßt sind.

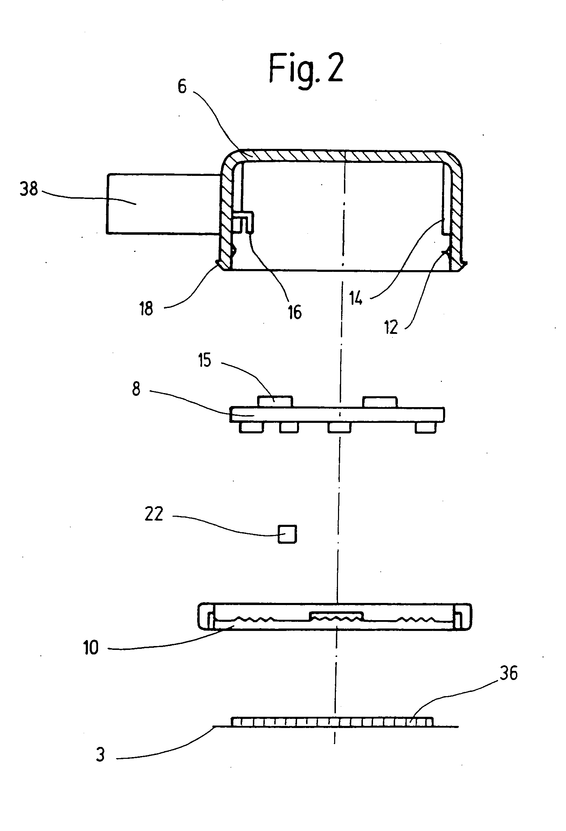

Die Figur 2 zeigt eine schematische Schnittansicht auf den erfindungsgemäßen Regensensor 4 in einer Explosionsdarstellung. Im topfförmigen Gehäuse 6, das in dieser Darstellung nach unten offen ist, ist eine Platine 8 gegen einen Absatz 14 innen im Gehäuse 6 einlegbar, auf der elektronische und optoelektronische Bauelemente, beispielsweise in SMD(surface mounted device)-Technik, montiert sind. Um die Platine 8 im Gehäuse 6 eindeutig zu fixieren, liegt sie gegen den Absatz 14 im Gehäuse an, nachdem sie beim Einlegen über die umlaufende Nut 12 gedrückt wurde. Diese hält die Platine 8 fest und hindert sie so am herausfallen nach unten. Weiterhin sind die nach innen in das Gehäuse 6 ragenden Steckerstifte 16 erkennbar, die beispielsweise mit einer partiellen Lötung oder dergleichen mit den passenden Leiterbahnen der Platine 8 verbunden werden. Ebenso möglich ist auch eine leitende Preßverbindung.

Als Bauteil ist beispielsweise eine auf der Oberseite der Patine 8 montierte Leuchtdiode beziehungsweise LED 15 erforderlich, die sichtbares oder infrarotes Licht in Form eines gerichteten Lichtstrahles emittiert. Der Lichtstrahl trifft in einem spitzen Winkel auf die Windschutzscheibe 2 auf und wird aufgrund deren Brechungsindex an ihrer äußeren Grenzfläche zur Luft normalerweise vollständig reflektiert und trifft nahezu vollständig als reflektierter Anteil auf eine Photodiode, die ebenfalls an geeigneter Stelle auf der Oberseite der Platine 8 montiert ist. Befindet sich nun am Ort der Reflexion des Lichtstrahls ein Wassertropfen außen auf der Windschutzscheibe 2, resultiert an der äußeren Grenzfläche der Scheibe zur Luft ein verändertes Brechungsverhalten, wodurch der Lichtstrahl an der Grenzfläche nicht vollständig reflektiert wird, sondern ein nach außen austretender gestreuter Anteil entsteht. Das dadurch abgeschwächte Signal des reflektierten Anteiles kann von der Photodiode detektiert und quantitativ ausgewertet werden und somit als Feuchtigkeitsschleier beziehungsweise Regen außen auf der Windschutzscheibe 2 des Kraftfahrzeuges erfaßt werden.

Die gewünschte Fokussierung des Lichtstrahles beziehungsweise des reflektierten Anteiles kann zweckmäßigerweise durch einen geeignet geformten Lichtleitkörper 10, bestehend aus einem hochtransparenten und gut spritzgießfähigen Kunststoff wie beispielsweise PMMA (Polymethylmetachrylat), erreicht werden, der gleichzeitig die Grundseite des Gehäuses 6 bildet und flächig über eine transparente Klebefolie 36 mit der Windschutzscheibe 2 verbunden ist. Durch geeignete Formung, vorzugsweise im Spritzgußverfahren, kann der Lichtleitkörper 10 eingeformte linsenförmige Strukturen erhalten, die für die gewünschte Fokussierung und Bündelung des von der LED 15 emittierten Lichtes sowie der von der Photodiode detektierten Lichtanteile sorgen.

Auf der Platine 8 ist weiterhin ein Umgebungslichtsensor 22 angeordnet, der von außen durch die Windschutzscheibe 2 des Kraftfahrzeuges fallendes Umgebungslicht in seiner Helligkeit erfassen und ein davon abhängiges Steuersignal für eine automatische Lichtsteuerung beziehungsweise für eine Tag/Nacht-Umschaltung der Scheibenwischersteuerung im Kraftfahrzeug generieren kann. Zweckmäßigerweise reagiert der Umgebungslichtsensor 22 vorzugsweise auf bestimmte UV-Lichtanteile, die nur im natürlichen Sonnenlicht vorkommen, um auf diese Weise ein unbeabsichtigtes Abschalten der Fahrzeugscheinwerfer in hell beleuchteten Tunnels oder Unterführungen mit starken künstlichen Lichtquellen auszuschließen.

Bei Verwendung von infrarotem Licht für den Regensensor 4 kann der Lichtleitkörper 10 beispielsweise aus schwarzem PMMA bestehen und nur eine kleine Stelle für den Umgebungslichtsensor 22 aus klarem Material enthalten.

Erkennbar ist weiterhin die transparente Klebefolie 36, die eine flächige Verbindung zur Windschutzscheibe 2 herstellt, wobei in der Figur 2 eine zusätzliche abziehbare Schutzfolie 3 auf der transparenten Klebefolie 36 erkennbar ist. Nach Entfernen dieser Schutzfolie 3 kann der Regensensor 4 einfach an die gewünschte Stelle auf die Windschutzscheibe 2 geklebt werden. Die Schutzfolie 3 dient einem Schutz des Lichtleitkörpers 10 und der Klebefolie 26 während des Transportes, Montage oder dergleichen vor mechanischen Beschädigungen.

Figur 4 zeigt zur Verdeutlichung nochmals den Lichtleitkörper 10 mit den darin im Spritzgießprozeß eingebrachten fokussierenden Strukturen (Sammellinsen) in einer perspektivischen Darstellung. Erkennbar sind am äußeren Rand jeweils eine längliche Nut 19, in die jeweils ein passender Steg 18 des Gehäuses 6 geklipst werden kann (Figur 2) und so eine festgefügte Verbindung zwischen dem unten offenen Gehäuse 6 und dem den unteren Gehäusedeckel bildenden Lichtleitkörper 10 ermöglicht.

## Patentansprüche

1. Regensensor, insbesondere für Kraftfahrzeuge, mit einer wenigstens einen Sender und wenigstens einen Empfänger für elektromagnetische Wellen (Lichtwellen) aufweisenden Meßstrecke, in der eine Windschutzscheibe angeordnet ist und die die Wellenausbreitung zwischen dem wenigstens einen Sender und dem wenigstens einen Empfänger derart beeinflußt, daß sich bei Ausbildung eines Belages auf der Windschutzscheibe, insbesondere bei einer Benetzung durch Niederschlag, ein vom Empfänger sensiertes Ausgangssignal ändert, **dadurch gekennzeichnet, daß** die optischen und elektronischen Komponenten des Regensensors (4) in einem Gehäuse (6) montiert sind, wobei ein Lichtleitkörper (10) einen Deckel des Gehäuses (6) bildet.

2. Regensensor nach Anspruch 1, **dadurch gekennzeichnet, daß** der Lichtleitkörper (10) eine mit der Windschutzscheibe (2) flächig verbundene Grundplatte des Sensorgehäuses (6) bildet.

3. Regensensor nach Anspruch 2, **dadurch gekennzeichnet, daß** alle optischen und elektronischen Komponenten des Regensensors (4) in SMD-Technik auf einer gemeinsamen Platine (8) montiert sind.

4. Regensensor nach Anspruch 3, **dadurch gekennzeichnet, daß** der Regensensor (4) in einem quaderförmigen Sensorgehäuse (6) mit einem integriertem Stecker (38) zur elektrischen Verbindung mit einer nachgeschalteten Auswerteeinheit montiert ist.

5. Regensensor nach Anspruch 4, **dadurch gekennzeichnet, daß** die Platine (8) über Kontaktstifte mit dem Stecker (38) am Sensorgehäuse (6) verbunden ist.

6. Regensensor nach Anspruch 7, **dadurch gekennzeichnet, daß** der Regensensor (4) von innen mit der Windschutzscheibe (2) verklebt ist.

7. Regensensor nach Anspruch 6, **dadurch gekennzeichnet, daß** eine transparente beidseitig selbstklebende Folie (36) als Verbindung zwischen Windschutzscheibe (2) und Lichtleitkörper (10) des Regensensors (4) vorgesehen ist.

8. Regensensor nach einem der vorhergehenden Ansprüche, **dadurch gekennzeichnet, daß** ein Ausgangssignal des Regensensors (4) an eine nachgeordnete Auswerteschaltung Informationen über einen momentanen Benetzungsgrad der Windschutzscheibe (2) enthält.

9. Regensensor nach Anspruch 8, **dadurch gekennzeichnet, daß** eine Scheibenwischvorrichtung und/oder eine Fahrzeugbeleuchtung in Abhängigkeit von den Ausgangssignalen des Regensensors (4) ansteuerbar sind.

10. Regensensor nach einem der vorhergehenden Ansprüche, **dadurch gekennzeichnet, daß** der wenigstens eine Sender eine LED (15) ist.

11. Regensensor nach Anspruch 10, **dadurch gekennzeichnet, daß** der erste Empfänger, der das von der wenigstens einen LED (15) emittierte optische Signal detektiert, eine Photodiode ist.

12. Regensensor nach einem der vorhergehenden Ansprüche, **dadurch gekennzeichnet, daß** als zweiter Empfänger wenigstens ein Umgebungslichtsensor (22) vorgesehen ist.

13. Regensensor nach Anspruch 12, **dadurch gekennzeichnet, daß** der Umgebungslichtsensor (22) einen Öffnungswinkel von circa 40° mit einer Öffnungsrichtung in Fahrtrichtung nach schräg oben aufweist.

14. Regensensor nach einem der Ansprüche 12 oder 13, **dadurch gekennzeichnet, daß** der wenigstens eine Umgebungslichtsensor (22) auf ultraviolettes Licht, insbesondere auf Sonnenlicht, empfindlich sind.

15. Regensensor nach einem der vorhergehenden Ansprüche, **dadurch gekennzeichnet, daß** bei Einsatz von IR(Infrarot)-Licht der Lichtleitkörper (10) für die Regensensorfunktion aus schwarzem Kunststoff besteht.

16. Regensensor nach einem der vorhergehenden Ansprüche, **dadurch gekennzeichnet, daß** für den wenigstens einen Empfänger (20) optische Bereiche im Lichtleitkörper (10) aus transparentem (klarem) Kunststoff vorgesehen sind.

17. Regensensor nach einem der vorhergehenden Ansprüche, **dadurch gekennzeichnet, daß** der Lichtleitkörper (10) aus einem Kunststoffteil im Zweifarb-Spritzverfahren besteht.

18. Regensensor nach einem der vorhergehenden Ansprüche, **dadurch gekennzeichnet, daß** der Lichtleitkörper (10) durch Kombination zweier einfarbiger Kunststoffe herstellbar ist.

19. Regensensor nach einem der vorgehenden Ansprüche, **dadurch gekennzeichnet, daß** der Lichtleitkörper (10) mit eingebrachten Linsenstrukturen zur Lichtbündelung versehen ist.
